# EUROPEAN PATENT APPLICATION

(11) **EP 2 506 217 A2**
(43) Date of publication of application: **03.10.2012**
(21) Application number: 12169757.7
(22) Date of filing: 17.03.2006
(51) Int. Cl.: G06T 7/20, G03B 5/00, G06T 7/60, H04N 5/14, H04N 5/232, H04N 7/26

(54) **Image motion vector detection device**

(30) Priority: 24.03.2005 JP 2005085380
(62) Divisional of application: 06729353.0
(71) Applicant: Mitsubishi Electric Corporation, Chiyoda-ku Tokyo 100-8310 (JP)
(72) Inventor: Sotoda, Shuji, Tokyo, 100-8310 (JP)
(74) Representative: Whitlock, Holly Elizabeth Ann

(57) **Abstract**

An image motion vector detection device, which can detect an image motion vector with reduced amount of computation, includes means (2H) for extracting a predetermined number of row data from one frame of image; means (3H) for filtering the row data for edge extraction; means (5H, 6H, 7H) for shifting each of filtered row data of a current frame by the number of pixels based on the filtered row data and a first threshold, and integrating each of the shifted row data; means (8H) for determining a horizontal motion vector in accordance with an output of the shifting/integrating means; means (2V) for extracting a predetermined number of column data from the one frame of image; means (3V) for filtering the column data for edge extraction; means (5V, 6V, 7V) for shifting each of filtered column data of the current frame by the number of pixels based on the filtered column data and a second threshold, and integrating each of the shifted column data; and means (8V) for determining a vertical motion vector in accordance with an output of the shifting/integrating means.

## Description

### TECHNICAL FIELD

The present invention relates to an image motion vector detection device which detects an image motion vector indicative of a motion of an object in a picture of a moving image.

### BACKGROUND ART

An image motion vector detection technique is applied to camera shake correction of a video camera (for example, refer to Non-Patent Document 1). A representative point matching method is known as a method for detecting a motion vector from images continuously captured in accordance with the image motion vector detection technique. In the representative point matching method, a representative point is set in images continuously captured at a fixed position in a previous frame of image, correlation operation is carried out for the corresponding pixels while shifting the previous frame of image in a two-dimensional direction relative to a current frame of image, and a shift having the highest correlation is output as a motion vector. However, this method has a problem that it is required that a brightness gradient equal to or higher than a constant value be present for the representative point. For example, this method cannot correctly detect a motion amount in an image having a low brightness gradient such as a document image.

For the purpose of solving the above-described problem, there is proposed a method in which feature point extraction of an image is first carried out, representative point matching operation is carried out with use of the extracted feature point as a representative point, and therefore a brightness gradient is always present for the representative point (for example, refer to Patent Document 1).

Non-Patent Document 1: "Automatic Image Stabilizing System by Video Signal Processing", ITEJ (the Institute of Television Engineers of Japan) Technical Report, Vol. 15, No. 7, pp. 43-48, January 1991.

Patent Document 1: Japanese Patent Publication No. 3534551.

### DISCLOSURE OF THE INVENTION

### PROBLEMS TO BE SOLVED BY THE INVENTION

In the conventional representative point matching method using the feature point as the representative point, however, it is required that correlation operation for the representative point be carried out while shifting pixels little by little throughout the entire searching range in the previous and current frames to find a motion vector by finding a position having the highest correlation. For this reason, the conventional method disadvantageously involves increased amount of computation.

It is therefore an object of the present invention to provide an image motion vector detection device which can solve the problem in the aforementioned conventional art and can detect an image motion vector with reduced amount of computation.

### MEANS OF SOLVING THE PROBLEMS

According to the present invention, an image motion vector detection device includes: a row thinning means which extracts a predetermined number of row data from one frame of image; a horizontal edge extraction filtering means which filters the extracted row data for edge extraction; a first decision/integration means which shifts each of filtered row data of a current frame by the number of pixels based on the filtered row data and a preset first threshold, and integrates each of the shifted row data; a horizontal motion vector decision means which determines a horizontal motion vector in accordance with an output of the first decision/integration means; a column thinning means which extracts a predetermined number of column data from the one frame of image; a vertical edge extraction filtering means which filters the extracted column data for edge extraction; a second decision/integration means which shifts each of filtered column data of the current frame by the number of pixels based on the filtered column data and a preset second threshold, and integrates each of the shifted column data; and a vertical motion vector decision means which determines a vertical motion vector in accordance with an output of the second decision/integration means.

### EFFBCTS OF THE INVENTION

In accordance with the present invention, since a motion vector can be detected by tracing an edge as a feature point of an image, the motion vector can advantageously be detected suitably even for an image that has pixels having small brightness gradients. Further, in accordance with the present invention, since the motion vector can be detected with reduced amount of computation, the present invention can advantageously be applied to a small device such as a camera cellular phone, for example.

### BRIEF DESCRIPTION OF THE DRAWINGS

FIG. 1 is a block diagram showing a configuration of an image motion vector detection device according to the first embodiment of the present invention;
FIG. 2 is a diagram for explaining operation of a row thinning means in the image motion vector detection device according to the first embodiment;
FIGs. 3A to 3N are waveform diagrams for explaining operation of a threshold intersection decision means and a signal integration means in the image motion vector detection device according to the first embodiment;
FIG. 4 is a block diagram showing a configuration of an image motion vector detection device according to the second embodiment of the present invention;
FIG. 5 is a diagram for explaining operation of a horizontal edge extraction filtering means and a vertical projection means in the image motion vector detection device according to the second embodiment;
FIG. 6 is a block diagram showing a configuration of an image motion vector detection device according to the third embodiment of the present invention;
FIG. 7 is a diagram for explaining operation of a row thinning means, a horizontal edge extraction filtering means, and a vertical projection means in the image motion vector detection device according to the third embodiment;
FIG. 8 is a block diagram showing a configuration of an image motion vector detection device according to the fourth embodiment of the present invention;
FIG. 9 is a diagram for explaining operation of a horizontal edge extraction filtering means and a vertical block projection means in the image motion vector detection device according to the fourth embodiment;
FIG. 10 is a block diagram showing a configuration of an image motion vector detection device according to the fifth embodiment of the present invention; and
FIG. 11 is a diagram for explaining operation of a row thinning means, a horizontal edge extraction filtering means, and a vertical block projection means in the image motion vector detection device according to the fifth embodiment.

### DESCRIPTION OF REFERENCE NUMERALS

1 frame memory; 2H row thinning means; 2V column thinning means; 3H, 3V edge extraction filtering means; 4H, 4V line memory; 5H, 5V threshold intersection decision means; 6H, 6V signal integration means; 7H, 7V peak decision means; 8H horizontal motion vector decision means; 8V vertical motion vector decision means; 11 current frame image; 12 k-th row data in current frame image; 13 k-th row data in previous frame image; 14H horizontal edge extraction filtering means; 14V vertical edge extraction filtering means; 15H vertical projection means; 15V horizontal projection means; 18 image data in frame memory; 19 output by horizontal edge extraction; 20 vertical projection operation result; 21 edge extraction filtering result of row thinning data; 22 vertical projection output result; 23H vertical block projection means; 23V horizontal block projection means; 25 combination of several rows of image data subjected to horizontal edge extraction; 26 vertical projection output result; 27 vertical projection output result.

### BEST MODE FOR CARRYING OUT THE INVENTION

### First Embodiment

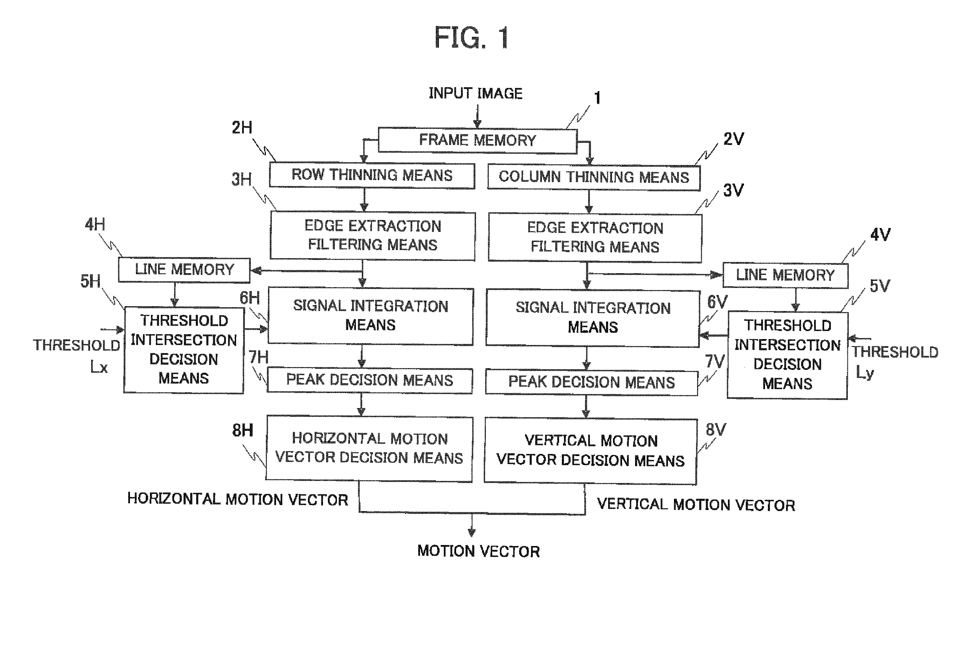

FIG. 1 is a block diagram showing a configuration of an image motion vector detection device according to the first embodiment of the present invention. The image motion vector detection device of the present invention can be used for the camera shake correction of a video camera or the like. In such video camera, the camera shake correction can be achieved by detecting a direction and a quantity in the motion of the video camera based on a detected motion vector and moving a use area on an image sensor in a direction in accordance with the detected direction and quantity so as to cancel the motion of the video camera.

As shown in FIG. 1, the image motion vector detection device according to the first embodiment includes a frame memory 1 which stores an input image corresponding to one frame, a row thinning means 2H which extracts a plurality of rows of image data from the image stored in the frame memory 1, an edge extraction filtering means 3H which filters an output of the row thinning means 2H for edge extraction, a line memory 4H which stores an output of the edge extraction filtering means 3H corresponding to the one frame, and a threshold intersection decision means 5H which determines whether or not the output of the edge extraction filtering means 3H as thinned data of the N-th row (N being a positive integer) in the previous frame stored in the line memory 4H crosses an input threshold L_{X}. The image motion vector detection device also includes a signal integration means 6H which integrates the filtered data of the N-th row as the output of the edge extraction filtering means 3H in accordance with an output of the threshold intersection decision means 5H, a peak decision means 7H which finds a position where an output of the signal integration means 6H becomes maximum, and a horizontal motion vector decision means 8H which finds a horizontal motion vector of the entire picture from an output of the peak decision means 7H corresponding to a plurality of rows.

Further, the image motion vector detection device according to the first embodiment includes a column thinning means 2V which extracts a plurality of rows of image data from the image stored in the frame memory 1, an edge extraction filtering means 3V which filters an output of the column thinning means 2V for edge extraction, a line memory 4V which stores an output of the edge extraction filtering means 3V corresponding to the one frame, and a threshold intersection decision means 5V which determines whether or not the output of the edge extraction filtering means 3V as thinned data of the M-th column (M being a positive integer) in the previous frame stored in the line memory 4V crosses an input threshold L_{Y}. The image motion vector detection device also includes a signal integration means 6V which integrates the filtered data of the M-th column as the output of the edge extraction filtering means 3V in accordance with an output of the threshold intersection decision means 5V, a peak decision means 7V which finds a position where an output of the signal integration means 6V becomes maximum, and a vertical motion vector decision means 8V which finds a vertical motion vector on the entire picture from an output of the peak decision means 7V corresponding to a plurality of columns.

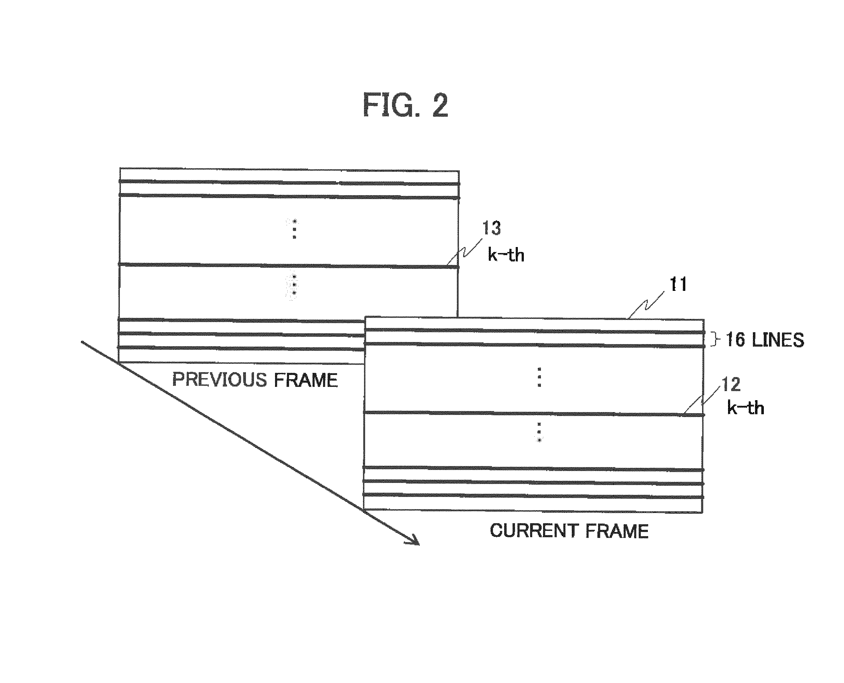

Explanation will next be made as to operation of the image motion vector detection device according to the first embodiment. In the image motion vector detection device according to the first embodiment, the frame memory 1 stores image data corresponding to one picture. The row thinning means 2H extracts one horizontal line of data of the image every sixteen lines from the image data stored in the frame memory 1, for example. FIG. 2 is a diagram for explaining operation of the row thinning means 2H. In FIG. 2, a reference numeral 11 denotes entire image data of the current frame. The row thinning means 2H extracts one row of data every sixteen lines from the entire image data 11, for example. In FIG. 2, thick lines shown in the entire image data 11 denotes the extracted data. For example, data 12 denotes row data extracted in the k-th order (k being a positive integer). All row data extracted in this way are output to the edge extraction filtering means 3H.

The edge extraction filtering means 3H filters the row data extracted by the row thinning means 2H for edge extraction. Filters used for this edge extraction includes a two-tap filter having a tap coefficient (1, -1) for simply calculating a difference between adjacent pixels or a three-tap filter having a tap coefficient (-1, 2, -1) corresponding to quadratic differential. Any other filter may be employed as the edge extraction filter, so long as it provides a large output value or a large absolute value for a part having a large brightness change and provides a small output value or a small absolute value for a part other than the large brightness part.

Further, the edge extraction filtering means 3H may convert data into two values indicative of "edge present" or "edge absent" or may convert data into three values indicative of "positive edge present", "edge absent", or "negative edge present", by passing data through the filter so as to provide a large output value or a large absolute value for a part having a large brightness change and then performing threshold processing on the output of the filter. Since the threshold processing is performed, it becomes possible to treat edges of sizes not smaller than the threshold in the same manner.

An output of the edge extraction filtering means 3H is output to the line memory 4H and also to the signal integration means 6H.

The line memory 4H stores the output of the edge extraction filtering means 3H corresponding to the one frame, and outputs data on the previous frame earlier by one frame to the threshold intersection decision means 5H.

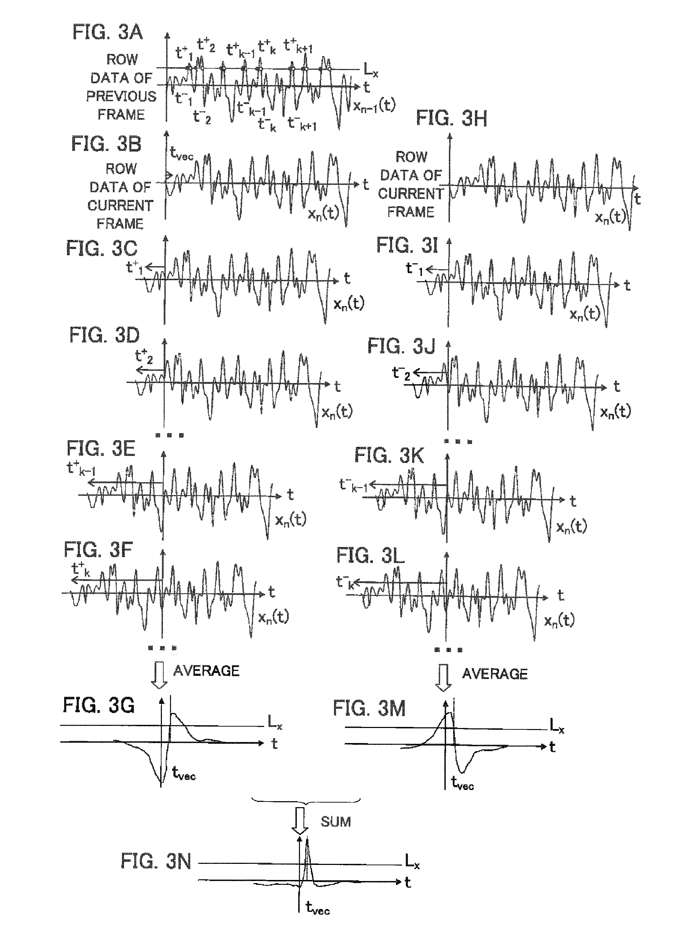

The operation of the threshold intersection decision means 5H and the signal integration means 6H will be explained by referring to FIGs. 3A to 3N. FIG. 3A shows row data obtained as a result, for example, after a line 13 which is the k-th data of the previous frame in FIG. 2 is processed by the edge extraction filtering means 3H. Such data is stored in the line memory 4H. The threshold intersection decision means 5H first finds points intersected between a signal xₙ₋₁(t) and the input threshold (preset threshold) L_{X} in a direction from the lower side to the upper side, and outputs the found points to the signal integration means 6H.

In FIG. 3A, the threshold intersection decision means 5H detects points (shown by circular black dots) t⁺₁, t⁺₂, ..., t⁺ₖ₋₁, t⁺ₖ, t⁺ₖ₊₁, ... of the signal intersected with the input threshold L_{X} from the lower side to the upper side.

Further, in FIG. 3A, the threshold intersection decision means 5H detects points (shown by circular white dots) t⁻₁, t⁻₂, ..., t⁻ₖ₋₁, t⁻ₖ, t⁻ₖ₊₁, ... of the signal intersected with the input threshold L_{X} from the upper side to the lower side.

The threshold intersection decision means 5H outputs information (position information) about the points t⁺₁, t⁺₂, ..., t⁺ₖ₋₁, t⁺ₖ, t⁺k+1, ..., and the points t⁻₁, t⁻₂, ..., t⁻ₖ₋₁, t⁻ₖ, t⁻ₖ₊₁, ... detected in this way to the signal integration means 6H.

The signal integration means 6H receives, together with the position information, a processed result of the row data of the image of the current frame transmitted from the edge extraction filtering means 3H. FIG. 3B shows an example of row data xₙ(t) obtained as a result in the case of the k-th data 12 of the current frame in FIG. 2 being processed by the edge extraction filtering means 3H. In this example, the row data of the current frame at the same position as the row processed by the threshold intersection decision means 5H is treated.

For easy understanding of processing contents, the first embodiment shows a case of the data xₙ(t) of the current frame being a signal obtained by shifting data xₙ₋₁(t) of the previous frame rightward by the number of pixels t_{vec}.

The signal integration means 6H first generates a signal obtained by shifting the row data of the current frame leftward by t⁺₁, as shown in FIG. 3C.

Next, the signal integration means 6H generates a signal obtained by shifting the row data of the current frame leftward by t⁺₂, as shown in FIG. 3D.

Further, the signal integration means 6H performs substantially the same kind of processing as the above on all intersection points ..., t⁺ₖ₋₁, t⁺ₖ, t⁺ₖ₊₁, ..., as shown in FIGs. 3E and 3F.

A signal shown by FIG. 3G is obtained by calculating an average of all signals obtained in this way. The signal shown by FIG. 3G is a curved line that crosses the threshold L_{X} from the lower side to the upper side at a position t_{vec} corresponding to a shift amount of the signal of the current frame relative to the signal of the previous frame. Explanation has been made in connection with this example where the signal of the current frame is obtained by shifting the signal of the previous frame. However, in an actual image, a curved line that crosses the threshold L_{X} from the lower side to the upper side at a position shifted by t_{vec} corresponding to the motion of the image caused by camera shake can be obtained.

The above explanation has been made in connection with the case where signals corresponding to the points t⁺₁, t⁺₂, ..., t⁺ₖ₋₁, t⁺ₖ, t⁺ₖ₊₁, ..., for example, all the signals shown in FIGs. 3C, 3D, ..., 3E, 3F, ... are generated and then an average of them is calculated. However, another processing procedure may be employed. For example, another processing procedure may include the steps of: adding the signal of FIG. 3D when it is generated to the signal of FIG. 3C and calculating an average of the signals from a result of the adding; and performing a weighed adding of the so far calculated average and the signal of FIG. 3E when it is generated and calculating an overall average of the signals from a result of the weighed adding.

Further, depending on the processing capability and data storing capability of the device, the above method for calculating an average of the signals of FIGs. 3C, 3D, ..., 3E, 3F, .... may also be replaced with using a value obtained only by adding the signals.

Next, the signal integration means 6H shifts the row data xₙ(t) of the current frame shown FIG. 3H leftward by t⁻₁, thereby generating a signal shown in FIG. 3I.

Next, the signal integration means 6H shifts the row data xₙ(t) of the current frame shown FIG. 3H leftward by t⁻₂, thereby generating a signal shown in FIG. 3J.

Further, the signal integration means 6H performs such operation on all intersection points ..., t⁻ₖ₋₁, t⁻ₖ, t⁻ₖ₊₁, ..., as shown in FIGs. 3K and 3L. By calculating an average of all the signals obtained in this way, a signal shown in FIG. 3M is obtained. In this case, a signal shown in FIG. 3M is a curved line that crosses the threshold L_{X} from the upper side to the lower side at a position corresponding to a shift amount t_{vec} of the current frame signal to the previous frame signal. Explanation has been made in this example in connection with the case where the current frame signal is obtained by shifting the previous frame signal. For an actual image, however, such a processing procedure may be possible that the curved line crosses the threshold from the upper side to the lower side at a position shifted by t_{vec} corresponding to the motion of the image caused by camera shake.

The above explanation has been made in connection with the case where signals corresponding to the points t⁻₁, t⁻₂, ..., t⁻ₖ₋₁, t⁻ₖ, t⁻ₖ₊₁, ..., for example, all the signals shown in FIGs. 3I, 3J,..., 3K, 3L, ... are generated and then an average of them is calculated. However, another processing procedure may be employed. For example, another processing procedure may include the steps of: adding the signal of FIG. 3J when it is generated to the signal of FIG. 3I and calculating an average of the signals from a result of the adding; and performing a weighed adding of the so far calculated average and the signal of FIG. 3K when it is generated and calculating an overall average of the signals from a result of the weighed adding.

The signal integration means 6H finally calculates a sum of the signal shown in FIG. 3G and the signal shown in FIG. 3M to obtain a signal shown in FIG. 3N. The signal of FIG. 3N thus obtained is sent to the peak decision means 7H.

The peak decision means 7H finds a maximum point in the output signal of the signal integration means 6H shown in FIG. 3N. The signal shown in FIG. 3N is a curved line that takes a maximum value of L_{X} multiplied by 2 a position corresponding to a shift amount of the current frame signal to the previous frame signal. Explanation has been made in this example in connection with the case where the current frame signal is obtained by shifting the previous frame signal. For an actual image, however, a curved line that takes a maximum value at a position shifted by t_{vec} corresponding to the motion of the image caused by camera shake can be obtained. In the example of FIG. 3N, the peak decision means determines that the signal takes its maximum value at the position shifted by t_{vec}, and outputs the data t_{vec} to the horizontal motion vector decision means 8H as a vector indicative of a horizontal motion vector for the corresponding row data.

In this connection, when the peak decision means 7H determines a peak in a curved line shown in FIG. 3N, there may occur a situation that a plurality of small peaks appear and a single peak does not appear clearly. In this case, the peak decision means may perform processing operation so as to perform threshold processing on a curved line shown in FIG. 3N and to detect only a peak having a constant value or higher. As a result, erroneous detection of the motion vector can be reduced.

The threshold intersection decision means 5H, the signal integration means 6H, and the peak decision means 7H perform the operation mentioned above on all the row data selected by the row thinning means 2H and processed by the edge extraction filtering means 3H to find respective horizontal motion vectors for the respective row data; and the found horizontal motion vectors are output to the horizontal motion vector decision means 8H.

The horizontal motion vector decision means 8H receives the horizontal motion vectors of all the row data sent from the peak decision means 7H, and outputs, for example, one of the horizontal motion vectors having the highest appearance frequency as an entire picture horizontal motion vector. In this example, one of the horizontal motion vectors having the highest appearance frequency has been selected as the entire picture horizontal motion vector. However, the present invention is not limited to this method but may also employ another method that calculates an average of the horizontal motion vectors as the entire picture horizontal motion vector, for example.

Meanwhile, the column thinning means 2V extracts, for example, one column of vertical data of an image every horizontal sixteen pixels. The operation of the edge extraction filtering means 3V, the line memory 4V, the threshold intersection decision means 5V, the signal integration means 6V, the peak decision means 7V, and the vertical motion vector decision means 8V are similar to the operation of the edge extraction filtering means 3H, the line memory 4H, the threshold intersection decision means 5H, the signal integration means 6H, the peak decision means 7H, and the horizontal motion vector decision means BH, respectively. As a result, an entire picture vertical motion vector is output from the vertical motion vector decision means 8V.

In this way, the entire picture horizontal vector is output from the horizontal motion vector decision means 8H and the entire picture vertical vector is output from the vertical motion vector decision means 8V. By combining these vectors, an entire picture motion vector is obtained.

In this way, paying attention to points at which row or column data of an image signal earlier by one frame crosses the threshold from the upper side to the lower side and also to points at which the row or column data crosses the threshold from the lower side to the upper side, the image motion vector detection device according to the first embodiment calculates an average of data obtained by shifting the current frame data by amounts corresponding to the crossed points and searches for one of the found averages having a maximum value to detect a motion vector. As a result, the device can trace a motion of a feature point such as an edge and find an image motion vector with reduced amount of computation.

### Second Embodiment

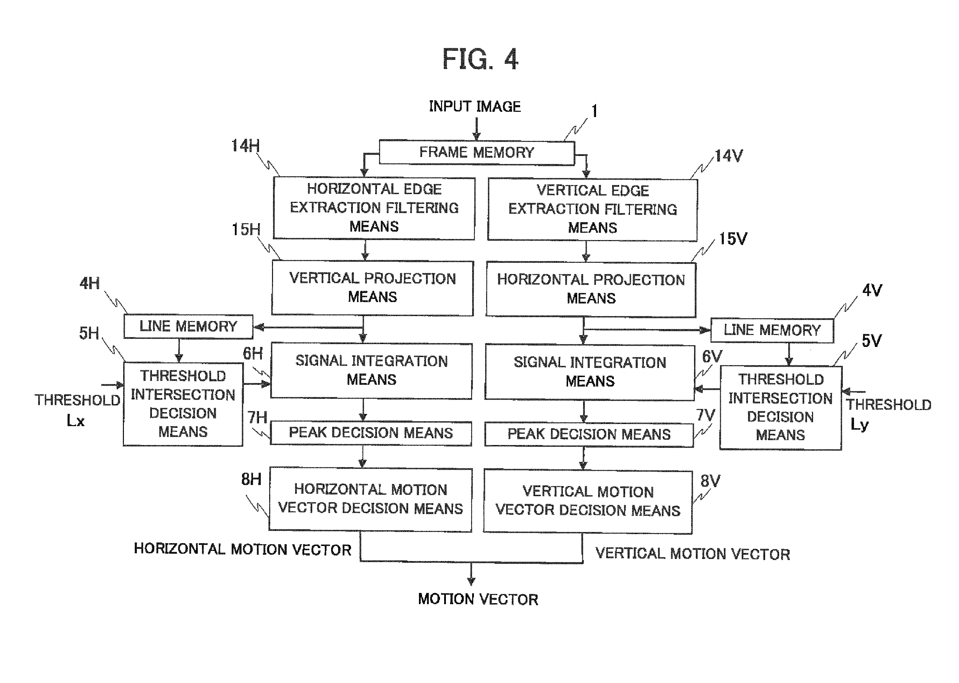

FIG. 4 is a block diagram showing a configuration of an image motion vector detection device according to the second embodiment of the present invention. In FIG. 4, constituent elements that are the same as or correspond to constituent elements in FIG. 1 (the first embodiment) are assigned the same reference numerals or symbols. The image motion vector detection device according to the second embodiment is different from that of the above-described first embodiment in that the row thinning means 2H and the edge extraction filtering means 3H in FIG. 1 are replaced with a horizontal edge extraction filtering means 14H and a vertical projection means 15H, and that the column thinning means 2V and the edge extraction filtering means 3V in FIG. 1 are replaced with a vertical edge extraction filtering means 14V and a horizontal projection means 15V.

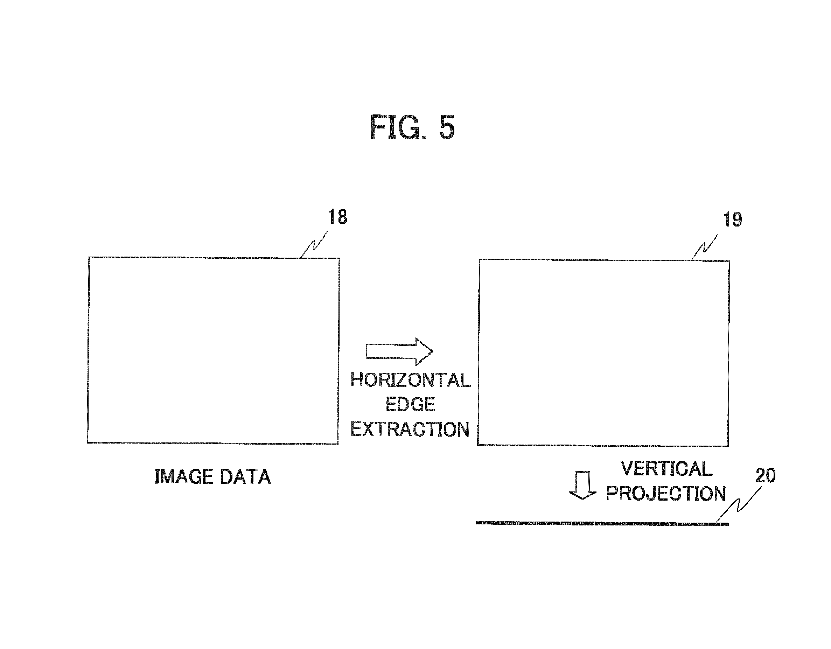

FIG. 5 is a diagram for explaining operation of the horizontal edge extraction filtering means 14H and the vertical projection means 15H in the image motion vector detection device according to the second embodiment. In FIG. 5, a reference numeral 18 denotes image data input to the horizontal edge extraction filtering means 14H. The horizontal edge extraction filtering means 14H first extracts one line of data from the image data 18 and performs substantially the same filtering operation as the edge extraction filtering means 3H on the extracted data to create one line of data having horizontal edge information. The vertical projection means 15H performs processing operation on all lines of the image data 18 to obtain data 19 corresponding to extracted horizontal edges. The vertical projection means 15H vertically projects all the data 19 corresponding to extracted horizontal edges to obtain one line of projection data 20. In this connection, the "vertically projects" is achieved, for example, by adding together vertical data.

As a result, the vertical projection data 20 contains information about horizontal edges of the image data 18, and the above projecting operation causes noise components for the lines to cancel each other. When the behavior of this data is analyzed, information on the horizontal motions in the entire image can be obtained from the one line of data.

The constituent elements indicated by from the line memory 4H to the peak decision means 7H perform processing operation similar to the first embodiment with use of one horizontal line of pixel data and extracted by the vertical projection means 15H. A peak position is found from a signal corresponding to FIG. 3N found from the vertical projection data 20. The horizontal motion vector decision means 8H outputs the output of the peak decision means 7H as it is as a horizontal motion vector.

In the first embodiment, the operation of the means indicated by from the threshold intersection decision means 5H to the peak decision means 7H is required by a number of times corresponding to the number of lines extracted by the row thinning means 2H. In the second embodiment, on the other hand, the operation of the means 5H - 7H is required only once and the entire image horizontal motion vector can be detected.

The same holds true even for detection of the vertical motion vector. That is, all columns are filtered by the vertical edge extraction filtering means 14V for vertical edge extraction and all data are horizontally projected by the horizontal projection means 15V to thereby obtain one column of data. The same operation as in the horizontal operation is then carried out even for one column of vertical data extracted by the horizontal projection means 15V to thereby obtain a vertical motion vector from the vertical motion vector decision means 8V.

Finally, the horizontal motion vector as the output of the horizontal motion vector decision means 8H and the vertical motion vector as the output of the vertical motion vector decision means 8V are combined to obtain an entire image motion vector.

In this way, paying attention to points at which vertical or horizontal projection data of an image signal earlier by one frame crosses the threshold from the upper side to the lower side and also to points at which the vertical or horizontal projection data crosses the threshold from the lower side to the upper side, the vector detection means in the second embodiment calculates an average of the projection data of the current frame shifted by an amount corresponding to the crossed points and searches for a maximum of the found averages to detect a motion vector, thereby finding a motion vector with less amount of threshold processing computation.

Further, except for the aforementioned respects, the second embodiment is substantially the same as the first embodiment.

### Third Embodiment

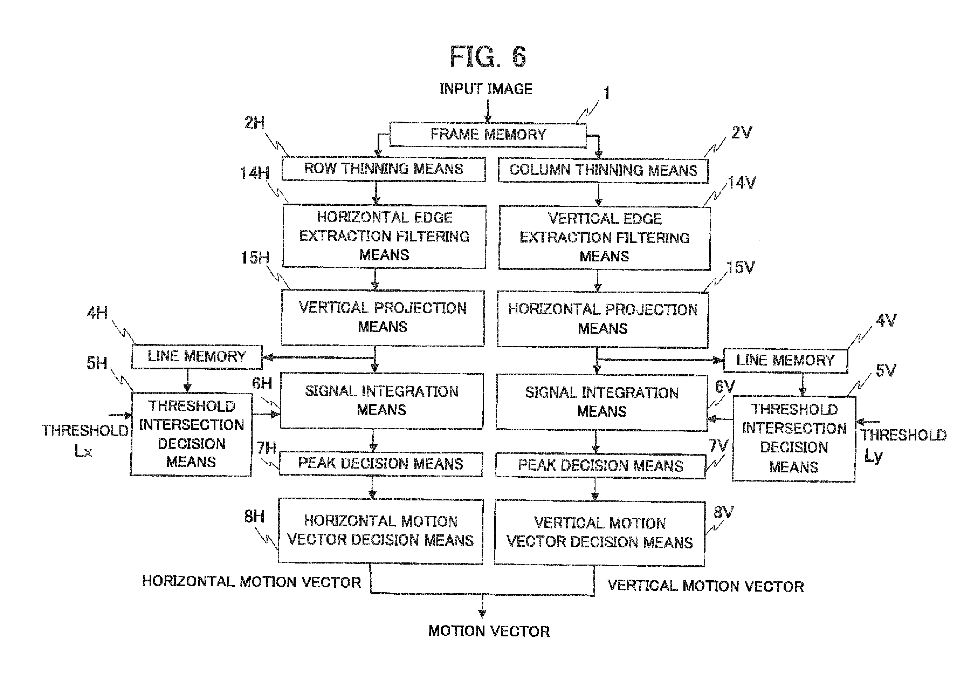

FIG. 6 is a block diagram showing a configuration of an image motion vector detection device according to the third embodiment of the present invention. In FIG. 6, constituent elements that are the same as or correspond to constituent elements in FIG. 4 (the second embodiment) are assigned the same reference numerals or symbols. The image motion vector detection device according to the third embodiment is different from that of the above-described second embodiment in that the row thinning means 2H is disposed between the frame memory 1 and the horizontal edge extraction filtering means 14H, and the column thinning means 2V is disposed between the frame memory 1 and the vertical edge extraction filtering means 14V.

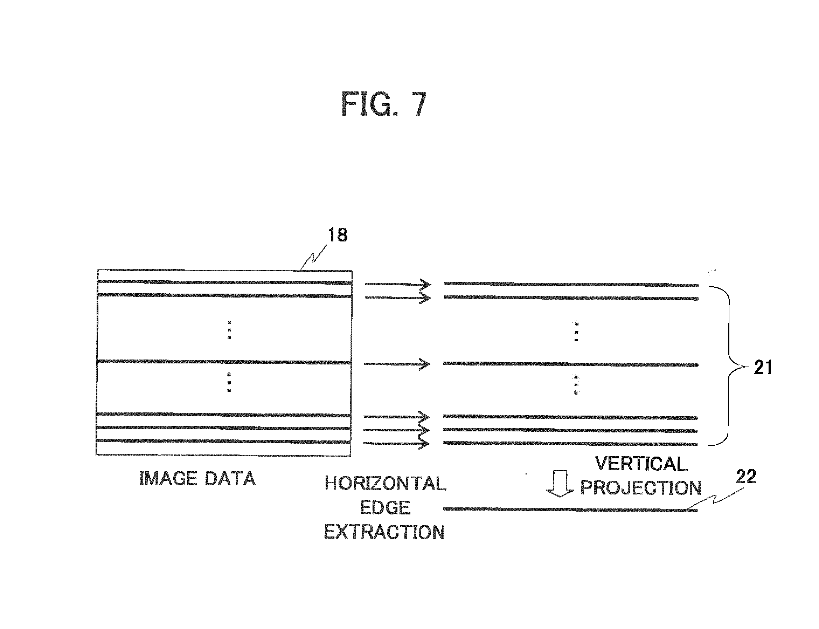

FIG. 7 is a diagram for explaining operation of the row thinning means 2H, the horizontal edge extraction filtering means 14H, and the vertical projection means 15H in the image motion vector detection device according to the third embodiment. In FIG. 7, a reference numeral 18 denotes image data stored in the frame memory 1. The row thinning means 2H extracts image data every several lines from the image data 18 stored in the frame memory 1, for example. In FIG. 7, the extracted lines of image data are shown by thick lines. The horizontal edge extraction filtering means 14H next filters the several lines of image data extracted by the row thinning means 2H for horizontal edge extraction to obtain a group of line data shown by a reference numeral 21 in FIG. 7, as an output of the horizontal edge extraction filtering means 14H. The vertical projection means 15H vertically projects a group of line data shown by 21 in FIG. 7 to obtain one line of data shown by a reference numeral 22 in FIG. 7.

In FIG. 6, the operation of the line memory 4H, the threshold intersection decision means 5H, the signal integration means 6H, and the peak decision means 7H is substantially the same as the operation in the second embodiment shown in FIG. 4.

Meanwhile, the column thinning means 2V extracts one column of vertical data for every predetermined image. The operation of the vertical edge extraction filtering means 14V, the horizontal projection means 15V, the line memory 4V, the threshold intersection decision means 5V, the signal integration means 6V, the peak decision means 7V, and the vertical motion vector decision means 8V is substantially the same as the operation of the horizontal edge extraction filtering means 14H, the edge extraction filtering means 3H, the line memory 4H, the threshold intersection decision means 5H, the signal integration means 6H, the peak decision means 7H, and the horizontal motion vector decision means 8H, respectively. As a result, the vertical motion vector decision means 8V outputs an entire image vertical motion vector.

As a result, the vertical projection data 22 contains information about all the horizontal edges extracted from the image data 18, and this projecting operation causes noise components for lines to cancel each other. When the behavior of this data is analyzed, information on the horizontal motion of the entire image can be obtained from the one line of data. In the third embodiment when compared with the second embodiment, since processing is carried out after row thinning operation, its computation amount is made less.

Further, except for the aforementioned respects, the third embodiment is substantially the same as the above-described second embodiment.

### Fourth Embodiment

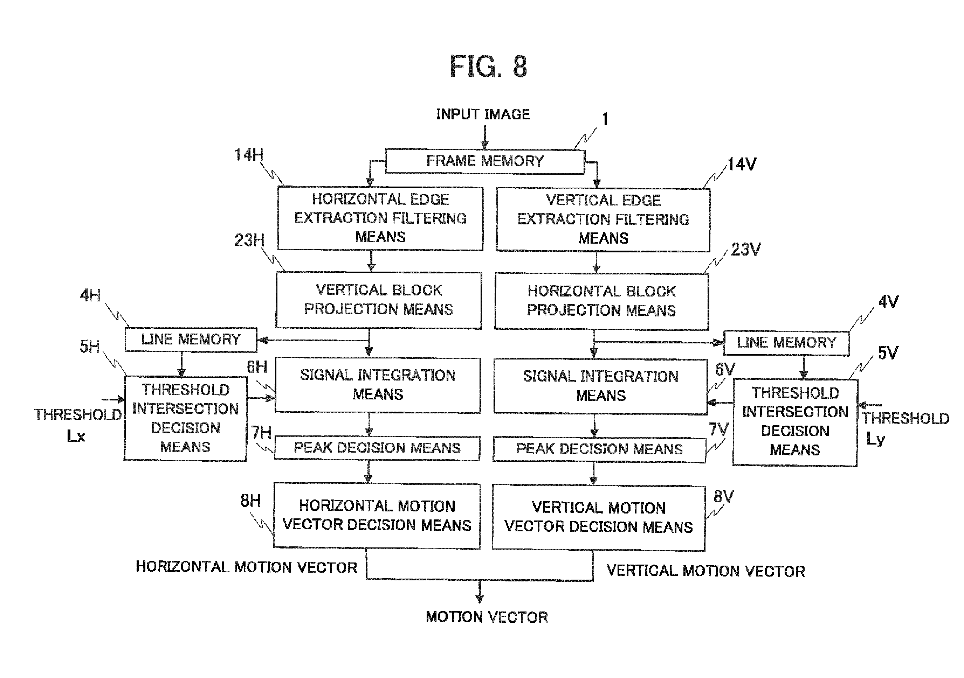

FIG. 8 is a block diagram showing a configuration of an image motion vector detection device according to the fourth embodiment of the present invention. In FIG. 8, constituent elements that are the same as or correspond to constituent elements in FIG. 1 (the first embodiment) are assigned the same reference numerals or symbols. The image motion vector detection device according to the fourth embodiment is different from that of the first embodiment in that the row thinning means 2H and the edge extraction filtering means 3H in FIG. 1 are replaced with the horizontal edge extraction filtering means 14H and a vertical block projection means 23H, and in that the column thinning means 2V and the edge extraction filtering means 3V in FIG. 1 are replaced with the vertical edge extraction filtering means 14V and a horizontal block projection means 23V.

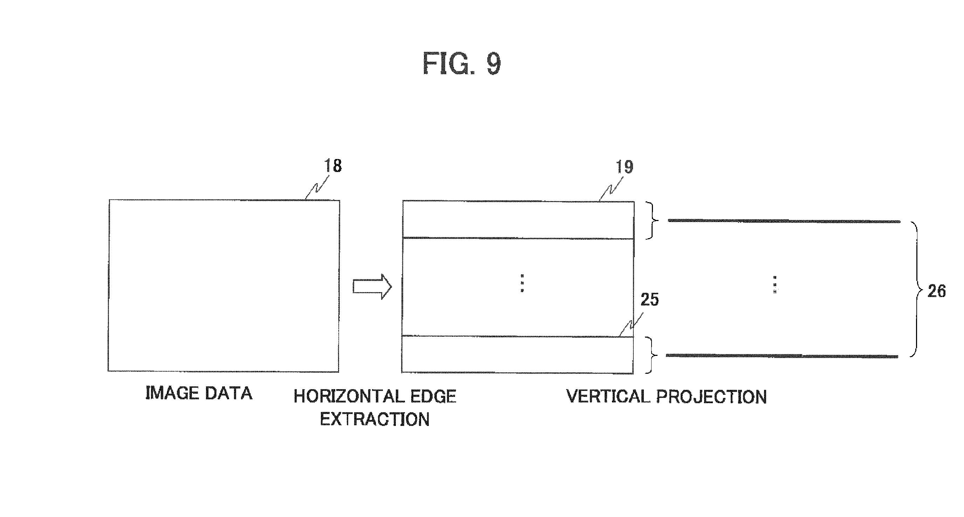

FIG. 9 is a diagram for explaining operation of the horizontal edge extraction filtering means 14H and the vertical block projection means 23H in the image motion vector detection device according to the fourth embodiment. In FIG. 9, a reference numeral 18 denotes image data stored in the frame memory 1. The horizontal edge extraction filtering means 14H filters all lines of the image data 18 stored in the frame memory 1 for horizontal edge extraction to obtain the data 19. The vertical block projection means 23H first divides the data 19 of FIG. 9 as the output of the horizontal edge extraction filtering means 14H into a plurality of vertical blocks. For example, a reference numeral 25 denotes one of the divided blocks. In the block dividing method, for example, each of the divided blocks may have a fixed number of lines or may have a different number of lines. The vertical block projection means 23H next acquires vertical projection data for all the divided blocks. In FIG. 9, the vertical projection data of the respective blocks eventually obtained are denoted by a reference numeral 26.

In FIG. 8, the operation of the line memory 4H, the threshold intersection decision means 5H, the signal integration means 6H, and the peak decision means 7H with respect to the data group assigned the reference numeral 26 in FIG. 9 is substantially the same as the operation in the first embodiment.

The operation of the vertical edge extraction filtering means 14V, the horizontal block projection means 23V, the line memory 4V, the threshold intersection decision means 5V, the signal integration means 6V, peak decision means 7V, and the vertical motion vector decision means 8V is substantially the same as the operation of the horizontal edge extraction filtering means 14H, the vertical block projection means 23H, the line memory 4H, the threshold intersection decision means 5H, the signal integration means 6H, peak decision means 7H, and the horizontal motion vector decision means 8H, respectively. As a result, an entire image vertical motion vector is output from the vertical motion vector decision means 8V.

As a result, the vertical projection data 26 contains information about all horizontal edges of the image data 18, and this projecting operation causes noise components for lines to cancel each other. A motion vector is found for each block, and an entire motion vector for the entire picture is eventually found from the found motion vectors, so that, when finding a motion not in the entire image but in part of the entire image, the device can determine the absence of the motion in the image.

Further, except for the aforementioned respects, the fourth embodiment is substantially the same as the above-described first embodiment.

### Fifth Embodiment

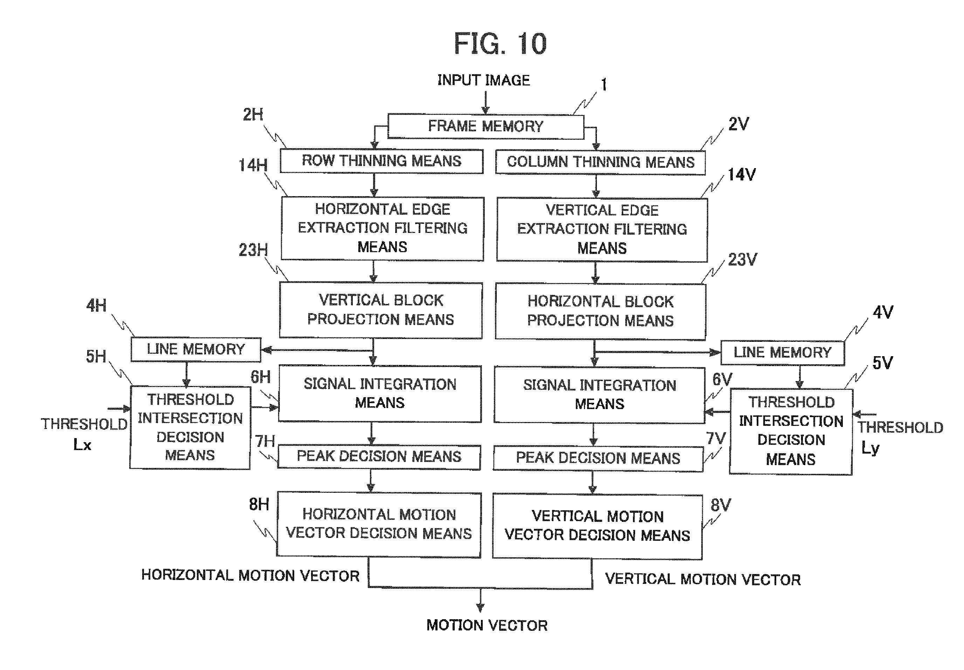

FIG. 10 is a block diagram showing a configuration of an image motion vector detection device according to the fifth embodiment of the present invention. In FIG. 10, constituent elements that are the same as or correspond to constituent elements in FIG. 8 (the fourth embodiment) are assigned the same reference numerals or symbols. The image motion vector detection device according to the fifth embodiment is different from that of the above-described fourth embodiment in that the row thinning means 2H is provided between the frame memory 1 and the horizontal edge extraction filtering means 14H and the column thinning means 2V is provided between the frame memory 1 and the vertical edge extraction filtering means 14V.

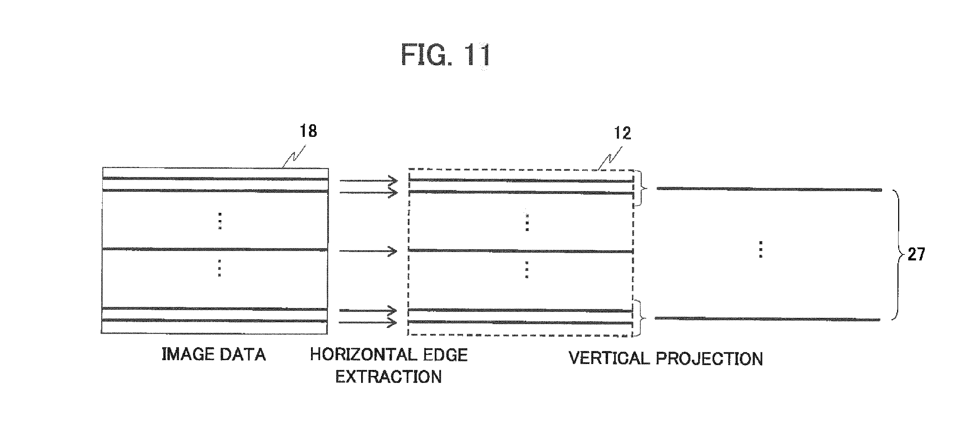

FIG. 11 is a diagram for explaining operation of the row thinning means 2H, the horizontal edge extraction filtering means 14H, and the vertical block projection means 23H in the image motion vector detection device according to the fifth embodiment. In FIG. 11, image data stored in the frame memory 1 is denoted by a reference numeral 18. The data shown by thick lines in the image data 18 are extracted by the row thinning means 2H from the image data 18, and the extracted data is output from the row thinning means. The horizontal edge extraction filtering means 14H filters the output of the row thinning means 2H for horizontal edge extraction to thereby obtain a group of row data shown by broken lines by a reference numeral 21 in FIG. 11. The vertical block projection means 23H divides the output of the horizontal edge extraction filtering means 14H shown by the reference numeral 21 in FIG. 11 into a plurality of blocks. In a block dividing method, for example, each divided block may have a fixed number of lines or may have a different number of lines. The vertical block projection means 23H next acquires vertical projection data for all the divided blocks. In FIG. 11, the vertical projection data of the respective blocks eventually obtained are denoted by a reference numeral 27.

In FIG. 10, the operation of the line memory 4H, the threshold intersection decision means 5H, the signal integration means 6H, the peak decision means 7H, and the horizontal motion vector decision means 8H is substantially the same as the operation in the fourth embodiment with respect to a data group 27 shown in FIG. 11.

Meanwhile, the column thinning means 2V extracts one column of vertical data for each predetermined image. The processing operation of the vertical edge extraction filtering means 14V, the horizontal block projection means 23V, the line memory 4V, the threshold intersection decision means 5V, the signal integration means 6V, the peak decision means 7V, and the vertical motion vector decision means 8V is substantially the same as the operation of the horizontal edge extraction filtering means 14H, the vertical block projection means 23H, the line memory 4H, the threshold intersection decision means 5H, the signal integration means 6H, peak decision means 7H, and the horizontal motion vector decision means 8H, respectively. As a result, an entire image vertical motion vector is output from the vertical motion vector decision means 8V.

As a result, the vertical projection data 27 contains information about all horizontal edges extracted from the image data 18, and this projecting operation causes noise components for lines to cancel each other. Further, a motion vector is found for each block and an entire image motion vector is eventually found from the found motion blocks, so that, when finding a motion not in the entire image but in part of the image, the device can determine the absence of the motion in the image. The fifth embodiment, when compared with the fourth embodiment, further can reduce its computation amount by finding the projection data from previously thinned image data.

Further, except for the aforementioned respects, the fifth embodiment is substantially the same as the above-described fourth embodiment.

## Claims

1. An image motion vector detection device comprising:
a row thinning means which extracts a predetermined number of row data from one frame of image;
a horizontal edge extraction filtering means which filters the extracted row data for edge extraction;
a first decision/integration means which shifts each of filtered row data of a current frame by the number of pixels based on the filtered row data and a preset first threshold, and integrates each of the shifted row data;
a horizontal motion vector decision means which determines a horizontal motion vector in accordance with an output of the first decision/integration means;
a column thinning means which extracts a predetermined number of column data from the one frame of image;
a vertical edge extraction filtering means which filters the extracted column data for edge extraction;
a second decision/integration means which shifts each of filtered column data of the current frame by the number of pixels based on the filtered column data and a preset second threshold, and integrates each of the shifted column data; and
a vertical motion vector decision means which determines a vertical motion vector in accordance with an output of the second decision/integration means.

2. The image motion vector detection device according to claim 1,
wherein the first decision/integration means includes:
a first threshold intersection decision means which determines an intersection between the filtered row data and the first threshold;
a first signal integration means which shifts each of the filtered row data of the current frame by the number of pixels based on the position where the filtered row data of the previous frame crosses the first threshold, and integrates the shifted row data; and
a first peak decision means which determines a peak in an output of the first signal integration means;
the determination of the horizontal motion vector by the horizontal motion vector decision means being carried out in accordance with an output of the first peak decision means;
wherein the second decision/integration means includes:
a second threshold intersection decision means which determines an intersection between the filtered column data and the second threshold;
a second signal integration means which shifts each of the filtered column data of the current frame by the number of pixels based on the position where the filtered column data of the previous frame crosses the second threshold, and integrates the shifted column data; and
a second peak decision means which determines a peak in an output of the second signal integration means;
the determination of the vertical motion vector by the vertical motion vector decision means being carried out in accordance with an output of the second peak decision means.

3. An image motion vector detection device comprising:
a horizontal edge extraction filtering means which filters horizontal row data of an image for edge extraction;
a vertical projection means which calculates a projection of the filtered row data output from the horizontal edge extraction filtering means in a vertical direction of the image;
a first decision/integration means which shifts data of a current frame that is output from the vertical projection means by the number of pixels based on the data output from the vertical projection means and a preset first threshold;
a horizontal motion vector decision means which determines a horizontal motion vector in accordance with an output of the first decision/integration means;
a vertical edge extraction filtering means which filters column data of the image for edge extraction;
a horizontal projection means which calculates a projection of the filtered column data output from the vertical edge extraction filtering means in a horizontal direction of the image;
a second decision/integration means which shifts data of the current frame that is output from the horizontal projection means by the number of pixels based on the data output from the horizontal projection means and a preset second threshold, and integrates the shifted data; and
a vertical motion vector decision means which determines a vertical motion vector in accordance with an output of the second decision/integration means.

4. The image motion vector detection device according to claim 3, further comprising:
a row thinning means which extracts a predetermined number of row data from the one frame of image; and
a column thinning means which extracts a predetermined number of column data from the one frame of image;
wherein the filtering of the horizontal edge extraction filtering means is data processing of the row data extracted by the row thinning means, and the filtering of the vertical edge extraction filtering means is data processing of the column data extracted by the column thinning means.

5. The image motion vector detection device according to claim 3 or 4,
wherein the first decision/integration means includes:
a first threshold intersection decision means which determines an intersection between the data output from the vertical projection means and the first threshold;
a first signal integration means which shifts the data of the current frame that is output from the vertical projection means by the number of pixels based on the position where the data output from the vertical projection means crosses the first threshold, and integrates the shifted data; and
a first peak decision means which determines a peak in an output of the first signal integration means,
the determination of the horizontal motion vector by the horizontal motion vector decision means being carried out in accordance with an output of the first peak decision means;
wherein the second decision/integration means includes:
a second threshold intersection decision means which determines an intersection between the data output from the horizontal projection means and the second threshold;
a second signal integration means which shifts the data of the current frame that is output from the horizontal projection means by the number of pixels based on the position where the data output from the horizontal projection means crosses the second threshold, and integrates the shifted data; and
a second peak decision means which determines a peak in an output of the second signal integration means;
the determination of the vertical motion vector by the vertical motion vector decision means being carried out in accordance with an output of the second peak decision means.

6. An image motion vector detection device comprising:
a horizontal edge extraction filtering means which filters horizontal row data of an image for edge extraction;
a vertical block projection means which vertically divides one frame of image into a plurality of blocks and calculates a projection of the filtered row data output from the horizontal edge extraction filtering means in a vertical direction of the image for each of the blocks;
a first decision/integration means which shifts the data of the current frame that is output from the vertical block projection means by the number of pixels based on the data output from the vertical block projection means and a preset first threshold, and integrates the shifted data;
a horizontal motion vector decision means which determines a horizontal motion vector in accordance with an output of the first decision/integration means;
a vertical edge extraction filtering means which filters column data in a vertical direction of the image for edge extraction;
a horizontal block projection means which horizontally divides the one frame of image into a plurality of blocks and calculates a projection of filtered column data output from the vertical edge extraction filtering means in a horizontal direction of the image for each of the blocks;
a second decision/integration means which shifts data of the current frame that is output from the horizontal block projection means by the number of pixels based on the data output from the horizontal block projection means and a preset second threshold, and integrates the shifted data; and
a vertical motion vector decision means which determines a vertical motion vector in accordance with an output of the second decision/integration means.

7. The image motion vector detection device according to claim 6, further comprising:
a row thinning means which extracts a predetermined number of row data from the one frame of image; and
a column thinning means which extracts a predetermined number of column data from the one frame of image;
wherein the filtering of the horizontal edge extraction filtering means is data processing of the row data extracted by the row thinning means, and the filtering of the vertical edge extraction filtering means is data processing of the column data extracted by the column thinning means.

8. The image motion vector detection device according to claim 6 or 7,
wherein the first decision/integration means includes:
a first threshold intersection decision means which determines an intersection between the data output from the vertical block projection means and the first threshold;
a first signal integration means which shifts the data of the current frame that is output from the vertical block projection means by the number of pixels based on the position where the data output from the vertical block projection means crosses the first threshold, and integrates the shifted data; and
a first peak decision means which determines a peak in an output of the first signal integration means;
the determination of the horizontal motion vector by the horizontal motion vector decision means being carried out in accordance with an output of the first peak decision means;
wherein the second decision/integration means includes:
a second threshold intersection decision means which determines an intersection between the data output from the horizontal block projection means and the second threshold;
a second signal integration means which shifts the data of the current frame that is output from the horizontal block projection means by the number of pixels based on the position where the data output from the horizontal block projection means crosses the second threshold, and integrates the shifted data; and
a second peak decision means which determines a peak in an output of the second signal integration means;
the determination of the vertical motion vector by the vertical motion vector decision means being carried out in accordance with an output of the second peak decision means.

9. The image motion vector detection device according to any of claims 1 to 4, 6, and 7, wherein the edge extraction by the horizontal edge extraction filtering means is carried out by calculating a difference between a pixel and an adjacent pixel in the row direction, and the edge extraction by the vertical edge extraction filtering means is carried out by calculating a difference between a pixel and an adjacent pixel in the column direction.

10. The image motion vector detection device according to any of claims 1 to 4, 6, and 7, wherein the edge extraction by the horizontal edge extraction filtering means is carried out by calculating differences between a pixel and adjacent pixels on both sides in the row direction, and the edge extraction by the vertical edge extraction filtering means is carried out by calculating differences between a pixel and adjacent pixels on both sides in the column direction.
